# EUROPEAN PATENT APPLICATION

(11) **EP 4 220 503 A1**
(43) Date of publication of application: **02.08.2023**
(21) Application number: 23153054.4
(22) Date of filing: 24.01.2023
(51) Int. Cl.: G06Q 10/02, G06Q 30/0645, G07F 17/00

(54) **MARINE VESSEL RENTAL SYSTEM AND MARINE VESSEL RENTAL METHOD**

(30) Priority: 28.01.2022 JP 2022011647
(71) Applicant: Yamaha Hatsudoki Kabushiki Kaisha, Iwata-shi, Shizuoka 438-8501 (JP)
(72) Inventor: Inoue, Hiroshi, Iwata-shi, Shizuoka, 438-8501 (JP)
(74) Representative: Grünecker Patent- und Rechtsanwälte PartG mbB

(57) **Abstract**

A marine vessel rental system that is able to appropriately permit/prohibit start of a driving source of a marine vessel in response to the time and the marine vessel's position. The marine vessel rental system includes a control unit configured or programmed to permit start of a driving source for navigating a marine vessel being a rental target on condition that a current time belongs to a rental period corresponding to an electronic key, and an obtaining unit configured or programmed to obtain position information of the marine vessel. In a case that the rental period corresponding to the electronic key has ended and the position information indicates that the marine vessel is positioned within a predetermined area, the control unit is configured or programmed to prohibit the start of the driving source.

## Description

The present invention relates to a marine vessel rental system and a marine vessel rental method that rent a marine vessel out to a user.

Conventionally, in order to improve convenience, a system that rents a marine vessel out to a user without using a physical key has been proposed. For example, in Japanese Laid-Open Patent Publication (kokai) No. JP 2021 - 165970 A, an owner's marine vessel is able to be rented out to a user, and the user is able to borrow the owner's marine vessel by using a user terminal. As for start of an engine, which is a driving source of the owner's marine vessel, key locking is restricted while the owner's marine vessel is navigating with keeping a predetermined distance away from a shore, and the start of the engine is not prohibited. In addition, when an end signal is received from the user terminal, the key locking is performed, and the start of the engine is prohibited.

However, a timing of receiving the end signal from the user terminal does not necessarily coincide with an end timing of a rental period of the owner's marine vessel. There is room for improvement from the viewpoint of more appropriately permitting/prohibiting the start of the driving source of the owner's marine vessel in consideration of the relationship with the rental period.

It is the object of the present invention to provide a marine vessel rental system and a marine vessel rental method that are able to appropriately permit/prohibit start of a driving source of a marine vessel in response to the time and the marine vessel's position.

According to the present invention, said object is solved by a marine vessel rental system having the features of independent claim 1. Moreover, said object is solved by a marine vessel rental method having the features of independent claim 14. Preferred embodiments are laid down in the dependent claims.

According to a preferred embodiment of the present invention, a marine vessel rental system includes a generating unit configured or programmed to generates an electronic key, which is associated with information about a marine vessel being a rental target and information about a rental period, in response to a request from a user terminal, and transmit it to the user terminal, a control unit configured or programmed to permit start of a driving source for navigating the marine vessel being the rental target on condition that a current time belongs to the rental period corresponding to the electronic key, and an obtaining unit configured or programmed to obtain position information of the marine vessel. In a case that the rental period corresponding to the electronic key has ended and the position information indicates that the marine vessel is positioned within a predetermined area, the control unit is configured or programmed to prohibit the start of the driving source.

According to another preferred embodiment of the present invention, a marine vessel rental system includes a control unit configured or programmed to permit start of a driving source for navigating a marine vessel being a rental target on condition that a current time belongs to a rental period corresponding to an electronic key, which is associated with information about the marine vessel being the rental target and information about the rental period and is stored in a user terminal, and an obtaining unit configured or programmed to obtain position information of the marine vessel. In a case that the rental period corresponding to the electronic key has ended and the position information indicates that the marine vessel is positioned within a predetermined area, the control unit is configured or programmed to prohibit the start of the driving source.

According to another preferred embodiment of the present invention, a marine vessel rental method carried out by at least one computer includes the following steps: generating an electronic key, which is associated with information about a marine vessel being a rental target and information about a rental period, in response to a request from a user terminal, and transmitting it to the user terminal, permitting start of a driving source for navigating the marine vessel being the rental target on condition that a current time belongs to the rental period corresponding to the electronic key, obtaining position information of the marine vessel, and in a case that the rental period corresponding to the electronic key has ended and the position information indicates that the marine vessel is positioned within a predetermined area, prohibiting the start of the driving source.

According to another preferred embodiment of the present invention, a marine vessel rental method carried out by at least one computer includes the following steps: permitting start of a driving source for navigating a marine vessel being a rental target on condition that a current time belongs to a rental period corresponding to an electronic key, which is associated with information about the marine vessel being the rental target and information about the rental period and is stored in a user terminal, obtaining position information of the marine vessel, and in a case that the rental period corresponding to the electronic key has ended and the position information indicates that the marine vessel is positioned within a predetermined area, prohibiting the start of the driving source.

According to the preferred embodiments of the present invention, in response to the request from the user terminal, the electronic key, which is associated with the information about the marine vessel being the rental target and the information about the rental period, is generated and is transmitted to the user terminal. On the condition that the current time belongs to the rental period corresponding to the electronic key, the start of the driving source for navigating the marine vessel being the rental target is permitted. The position information of the marine vessel is obtained. In the case that the rental period corresponding to the electronic key has ended and the position information indicates that the marine vessel is positioned within the predetermined area, the start of the driving source is prohibited.

For example, even in the case that the rental period corresponding to the electronic key has ended, if the marine vessel is positioned outside the predetermined area, the start of the driving source will not be prohibited. As a result, it is possible to appropriately permit/prohibit the start of the driving source of the marine vessel in response to the time and the marine vessel's position.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a diagram that shows an overall configuration of a marine vessel rental system according to a preferred embodiment of the present invention.
FIG. 2 is a block diagram of principal components of the marine vessel rental system of FIG. 1.
FIG. 3 is a diagram that shows a functional block which realizes the marine vessel rental system of FIG. 1.
FIG. 4 is a flowchart that shows an electronic key issuing processing.
FIG. 5 is a flowchart that shows a marina unlocking control processing.
FIG. 6 is a flowchart that shows a start permission/prohibition processing.

### DETAILED DESCRIPTION OF THE PREFERRED EMBODIMENTS

Hereinafter, preferred embodiments of the present invention will be described with reference to the drawings.

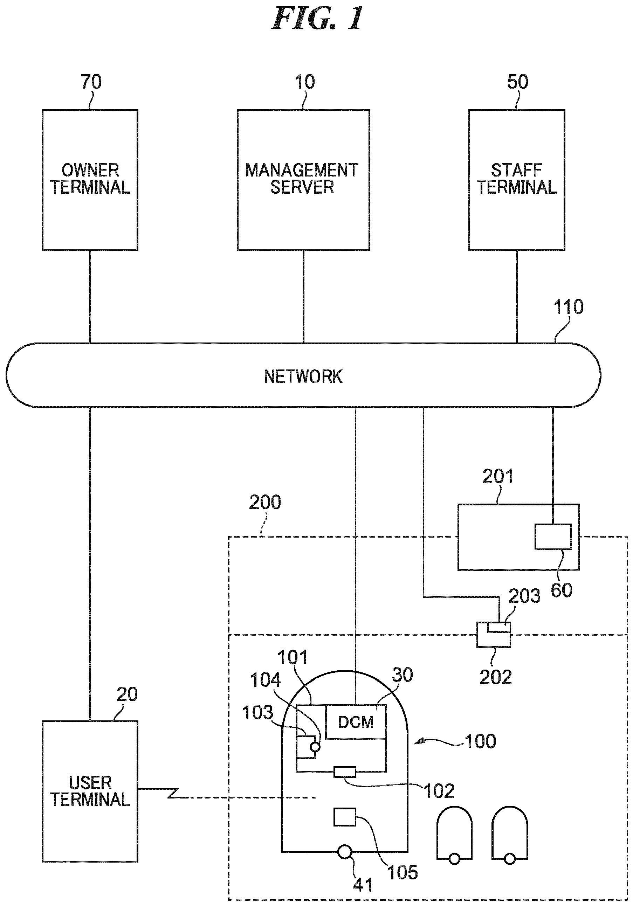

FIG. 1 is a diagram that shows an overall configuration of a marine vessel rental system according to a preferred embodiment of the present invention.

As one example, the marine vessel rental system of FIG. 1 is a system that rents an owner's marine vessel out to a user. Although there are a plurality of the owner's marine vessels which are rental targets, since all of the plurality of the owner's marine vessels which are the rental targets have the same configuration, as a representative of the owner's marine vessels, a marine vessel 100 will be described. The marine vessel 100 includes a data communication module (DCM) 30 that performs wireless communications and various kinds of controls.

As shown in FIG. 1, the marine vessel rental system of FIG. 1 includes a management server 10, a user terminal 20, the DCM 30 of the marine vessel 100, a staff terminal 50, an unlocking processing unit 60, an unlocking processing unit 203, and an owner terminal 70, and respective components of the marine vessel rental system of FIG. 1 are able to communicate with each other via a network 110. The network 110 is a wireless communication network such as the Internet. The management server 10 is, for example, a cloud server.

The user terminal 20, the owner terminal 70, and the staff terminal 50 are communication terminal devices such as smartphones, but may be personal computers. The user terminal 20 is the communication terminal device possessed (operable) by a user who borrows the marine vessel 100. The owner terminal 70 is the communication terminal device possessed (operable) by an owner of the marine vessel 100. The staff terminal 50 is a predetermined terminal device different from the user terminal 20, and is possessed (operable) by a staff member who provides services such as the movement of the marine vessel 100 to be rented out and refueling of the marine vessel 100 to be rented out. Although one user terminal 20, one owner terminal 70, one staff terminal 50, and one management server 10 are shown in FIG. 1, the marine vessel rental system of FIG. 1 may include a plurality of the user terminals 20, a plurality of the owner terminals 70, a plurality of the staff terminals 50, and a plurality of the management servers 10.

A mooring space for the marine vessel 100 is included within a marina 200. Generally, the user who borrows the marine vessel 100 is able to pass through a marina gate 201 and enter the marina 200, and is able to pass through a pier gate 202 and access the marine vessel 100. The marina gate 201 and the pier gate 202 are generally locked.

The marina gate 201 is provided with the unlocking processing unit 60, and the pier gate 202 is also provided with the unlocking processing unit 203 same as the unlocking processing unit 60. The unlocking processing unit 60 and the unlocking processing unit 203 permit unlocking of the marina gate 201 and unlocking of the pier gate 202 to the user who satisfies a predetermined condition (described below) including authentication.

The marine vessel 100 includes a cabin 101. An unlocking processing unit 102 processes unlocking of the cabin 101, that is, processes permission/prohibition of entry into the cabin 101. In addition, an unlocking processing unit 104 processes unlocking of a storage compartment 103 within the cabin 101. Furthermore, an unlocking processing unit (not shown) processes unlocking of a hatch 105, and/or unlocking of a storage compartment (not shown) within the marine vessel 100. The marine vessel 100 includes a driving source 41 for navigating the marine vessel 100. The driving source 41 is, for example, an engine, but may be an electric motor.

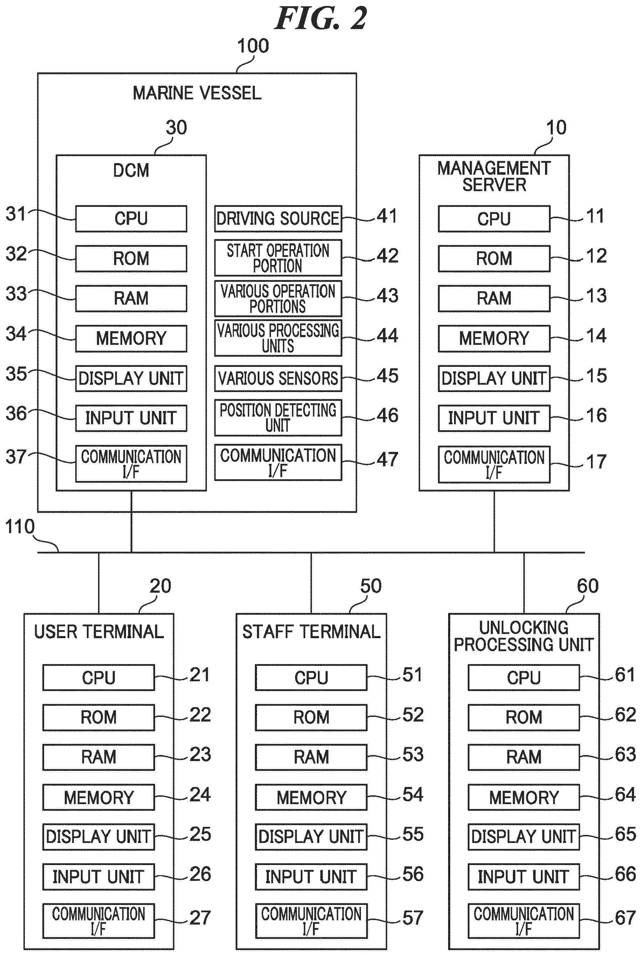

FIG. 2 is a block diagram of principal components of the marine vessel rental system of FIG. 1. In the marine vessel 100, the DCM 30 controls the entire marine vessel 100 including the driving source 41. The DCM 30 includes a CPU (Central Processing Unit) 31, a ROM (Read Only Memory) 32, a RAM (Random Access Memory) 33, a memory 34, a display unit 35, an input unit 36, a communication I/F (interface) 37, and a timer (not shown). The ROM 32 or the memory 34 stores control programs. The CPU 31 realizes various kinds of control processing by loading the control programs, which are stored in the ROM 32 or the memory 34, into the RAM 33 and executing them. The RAM 33 provides a working area when the CPU 31 executes the control programs. The display unit 35 displays various kinds of information. The input unit 36 accepts inputting of setting values and modes from a marine vessel operator of the marine vessel 100. The communication I/F 37 is not only able to communicate with the network 110, but also able to communicate with an ECU (an engine control unit (not shown)) that controls the driving source 41 via a CAN (Control Area Network) or the like. The display unit 35 may have a simple configuration such as an LED (light emitting diode) display. Moreover, providing the input unit 36 is not essential.

The marine vessel 100 includes the DCM 30, the driving source 41, a start operation portion 42, various operation portions 43, various processing units 44, various sensors 45, a position detecting unit 46, and a communication I/F 47. The start operation portion 42 is a start switch or the like for inputting an instruction to start the driving source 41. When the driving source 41 is stopped and the start of the driving source 41 is permitted, the driving source 41 is started by appropriately operating the start operation portion 42. The various operation portions 43 are operation portions such as a steering wheel and a remote controller that are operated by the user to maneuver the marine vessel 100. The various operation portions 43 are also used by the user to input various kinds of settings.

The various processing units 44 include an ECU and process various kinds of operations related to the marine vessel 100. The various sensors 45 include sensors that detect operations of various operation portions 43. In addition, the various sensors 45 include an acceleration sensor, a speed sensor, an angular speed sensor, and the like (none of which are shown). The position detecting unit 46 receives GPS signals from GPS (Global Positioning System) satellites and outputs position information indicating the current position of the marine vessel 100. The communication I/F 47 is able to communicate with the communication I/F 37 of the DCM 30 via the CAN or the like.

The management server 10 includes a CPU 11, a ROM 12, a RAM 13, a memory 14, a display unit 15, an input unit 16, a communication I/F 17, and a timer (not shown). The CPU 11 realizes various kinds of control processing by loading control programs, which are stored in the ROM 12 or the memory 14, into the RAM 13 and executing them. The RAM 13 provides a working area when the CPU 11 executes the control programs. The display unit 15 displays various kinds of information. The input unit 16 accepts inputting of various kinds of settings and instructions from an administrator of the management server 10. The memory 14 stores an application for realizing the marine vessel rental system (hereinafter, referred to as "a rental application") and related applications corresponding to the rental application. The communication I/F 17 is able to communicate with the network 110. In addition, in the process of performing a rental processing, various kinds of information such as setting information, corresponding information (described below), the position information of the marine vessel 100, etc. are stored in the memory 14.

The user terminal 20 includes a CPU 21, a ROM 22, a RAM 23, a memory 24, a display unit 25, an input unit 26, a communication I/F 27, and a timer (not shown). The configurations of the CPU 21, the ROM 22, the RAM 23, the memory 24, and the display unit 25 are basically the same as the configurations of the CPU 11, the ROM 12, the RAM 13, the memory 14, and the display unit 15 of the management server 10. The input unit 26 accepts inputting of various kinds of settings and instructions from the user who possess the user terminal 20. The communication I/F 27 is able to communicate with the network 110. The communication I/F 27 also includes a short-range wireless communication function such as Bluetooth (registered trademark). In addition, the rental application downloaded from the management server 10 is stored in the memory 24.

The staff terminal 50 includes a CPU 51, a ROM 52, a RAM 53, a memory 54, a display unit 55, an input unit 56, a communication I/F 57, and a timer (not shown). The configurations of the CPU 51, the ROM 52, the RAM 53, the memory 54, the display unit 55, and the communication I/F 57 are basically the same as the configurations of the CPU 21, the ROM 22, the RAM 23, the memory 24, the display unit 25, and the communication I/F 27 of the user terminal 20. The input unit 56 accepts inputting of various kinds of settings and instructions from a user (the staff member) who possess the staff terminal 50. In addition, the related application for staff downloaded from the management server 10 is stored in the memory 54.

The unlocking processing unit 60 includes a CPU 61, a ROM 62, a RAM 63, a memory 64, a display unit 65, an input unit 66, a communication I/F 67, and a timer (not shown). The configurations of the CPU 61, the ROM 62, the RAM 63, the memory 64, the display unit 65, and the communication I/F 67 are basically the same as the configurations of the CPU 21, the ROM 22, the RAM 23, the memory 24, the display unit 25, and the communication I/F 27 of the user terminal 20. The input unit 66 accepts inputting of various kinds of settings and instructions from a person who manages the unlocking processing unit 60 (for example, the above staff member). In addition, the related application for unlocking processing downloaded from the management server 10 is stored in the memory 64.

Although illustration is omitted, the configuration of the unlocking processing unit 203 is the same as that of the unlocking processing unit 60. Further, the configurations of the unlocking processing unit 102, the unlocking processing unit 104, and the unlocking processing unit (not shown) that processes the unlocking of the hatch 105, and/or the unlocking of the storage compartment within the marine vessel 100 may be the same as the configuration of the unlocking processing unit 203. However, these unlocking processing units may have a simple configuration in which communication functions with the CPU and the network 110 are omitted.

A plurality of communication functions may be included in the communication I/Fs 37, 47, 17, 27, and 57, and the methods of those communication functions may be wired or wireless. Also, all of the communication I/Fs 37, 47, 17, 27, and 57 may include communications with the network 110, or may include a short-range wireless communication function.

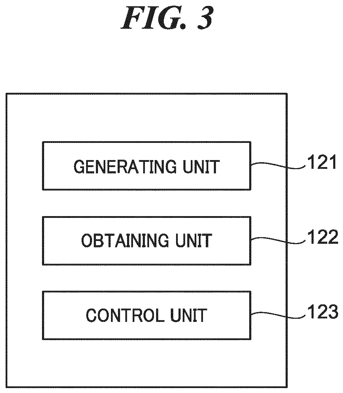

FIG. 3 is a diagram that shows a functional block which realizes the marine vessel rental system of FIG. 1. The functional block is realized (implemented) by at least one computer. The functional block includes a generating unit 121, an obtaining unit 122, and a control unit 123. Either or both of the DCM 30 and the management server 10 are assumed serving as at least one computer that realizes (implements) the functional block. Therefore, any one or all of the generating unit 121, the obtaining unit 122, and the control unit 123 are realized (implemented) by at least one of the DCM 30 and the management server 10. In the preferred embodiment of the present invention, as a representative example, the generating unit 121 is realized (implemented) by the management server 10, and the obtaining unit 122 and the control unit 123 are realized (implemented) by the DCM 30.

It should be noted that functions of the obtaining unit 122 and the control unit 123 realized by the DCM 30 are mainly realized by the cooperation of the CPU 31, the ROM 32, the RAM 33, the memory 34, the communication I/F 37 (see FIG. 2), etc. In the case that the marine vessel 100 is rented out, an application program for the DCM 30, which corresponds to the rental application, is downloaded to the memory 34 and is installed in the DCM 30. The functions of the obtaining unit 122 and the control unit 123 are realized by the CPU 31 executing the application program.

It should be noted that a function of the generating unit 121 realized by the management server 10 is mainly realized by the cooperation of the CPU 11, the ROM 12, the RAM 13, the memory 14, the communication I/F 17 (see FIG. 2), etc. A software program for the management server 10, which corresponds to the rental application, is stored in the memory 14. The function of the generating unit 121 is realized by the CPU 11 executing the software program.

In response to a request from the user terminal 20, the generating unit 121 generates an electronic key, which is associated with information about the marine vessel 100 being the rental target, information about a rental period, etc. The information about the marine vessel 100 being the rental target, the information about the rental period, and information about the corresponding marina are referred to as "the corresponding information". The corresponding marina is the marina where the marine vessel 100 being the rental target is moored. The electronic key includes an ID (identification) or the like for linking to the corresponding information. The corresponding information is stored in the memory 14 of the management server 10. The generating unit 121 further associates the generated electronic key with the corresponding information and transmits it to the user terminal 20 being a request source. The electronic key received by the user terminal 20 is associated with the corresponding information by the ID and is stored in the memory 24 of the user terminal 20.

The obtaining unit 122 obtains the position information of the marine vessel 100. For example, the obtaining unit 122 obtains the position information of the marine vessel 100, which is outputted from the position detecting unit 46, by receiving it through the communication I/F 37.

The control unit 123 executes control to permit or prohibit the start of the driving source 41 (see FIG. 2). For example, the control unit 123 permits the start of the driving source 41 of the marine vessel 100 being the rental target on condition that the current time belongs to the rental period corresponding to the electronic key. In addition, in the case that the rental period corresponding to the electronic key has ended and the position information indicates that the marine vessel 100 is positioned within a predetermined area, the control unit 123 prohibits the start of the driving source 41. The predetermined area referred to here is, for example, the inside of the marina 200 (inside the marina gate 201) or the inside of the pier (inside the pier gate 202).

In a state in which the start of the driving source 41 is prohibited, the driving source 41 will not newly be started even in the case that the start operation portion 42 is operated. However, even in the case that the start of the driving source 41 is prohibited while the driving source 41 is in operation, the driving source 41 will not forcibly be stopped at the same time.

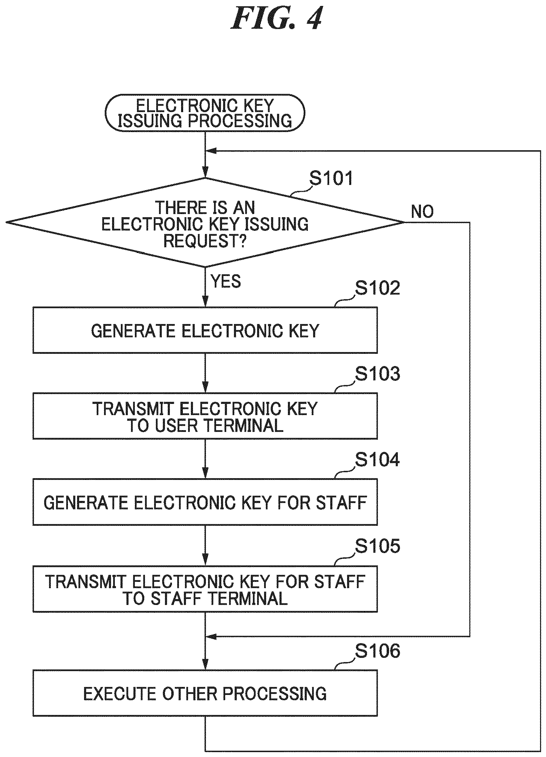

Next, with reference to FIGs. 4 to 6, the process from applying for a marine vessel rental reservation to renting out a marine vessel will be described.

The owner registers in advance the marine vessel he/she wishes to rent out to the management server 10 from the owner terminal 70 or his/her own personal computer. The management server 10 manages marine vessels that are able to be rented out.

The user who wants to rent a marine vessel downloads and installs the rental application to the user terminal 20 in advance. It should be noted that the staff terminal 50, the unlocking processing unit 60, the unlocking processing unit 203, the owner terminal 70, etc. are also installed with necessary related applications in advance.

The user applies for a marine vessel rental reservation from the user terminal 20 or his/her own personal computer. Reception and processing of the marine vessel rental reservation are executed, for example, by the management server 10, but may be executed by another computer. At the reservation stage, the user is required to specify the marine vessel he/she wants to rent, the period he/she wants to rent (the rental period), etc. Also, it is necessary to register the destination of the electronic key (here, information that uniquely identifies the user terminal 20).

It should be noted that the information required at the registration stage of the marine vessel the owner wishes to rent out and at the reservation stage may include information disclosed in Japanese Laid-Open Patent Publication (kokai) No. 2021-165970.

FIG. 4 is a flowchart that shows an electronic key issuing processing. The electronic key issuing processing is realized by the CPU 11 of the management server 10 loading the program stored in the ROM 12 or the memory 14 into the RAM 13 and executing it.

As shown in FIG. 4, first, in a step S101, the CPU 11 of the management server 10 judges whether or not there is an electronic key issuing request. When the marine vessel rental reservation is completed, the electronic key issuing request is generated. In the case that there is no the already-been-generated electronic key issuing request, the CPU 11 judges that there is no electronic key issuing request, and the electronic key issuing processing proceeds to a step S106. On the other hand, in the case that there is the already-been-generated electronic key issuing request, the CPU 11 judges that there is the electronic key issuing request, and the electronic key issuing processing proceeds to a step S102.

In the step S102, the CPU 11 generates an electronic key corresponding to the electronic key issuing request. At that time, the CPU 11 also generates corresponding information and an ID linked to the corresponding information. The CPU 11 associates the corresponding information with the electronic key and includes the ID in the electronic key. The electronic key and the corresponding information are stored in the memory 14.

In a step S103, the CPU 11 makes a reservation to transmit the generated electronic key (including the ID) to the user terminal 20 being the request source. It should be noted that the generated electronic key (including the ID) may be transmitted immediately to the user terminal 20 being the request source. However, it is not essential and it is sufficient if the generated electronic key (including the ID) is transmitted to the user terminal 20 being the request source before renting out the marine vessel begins. Therefore, the process executed in the step S103 may be a transmission reservation for transmission at a designated transmission timing. The generated electronic key (including the ID) is transmitted to the user terminal 20 at a reserved transmission timing and is stored in the memory 24 of the user terminal 20.

In a step S104, the CPU 11 generates an electronic key for staff (another electronic key) that restricts use of a part of functions of the marine vessel 100, corresponding to the electronic key for user transmitted to the user terminal 20. In a step S105, the CPU 11 makes a reservation to transmit the generated electronic key for staff to the staff terminal 50. The generated electronic key for staff is transmitted to the staff terminal 50 at a reserved transmission timing and is stored in the memory 54 of the staff terminal 50.

The electronic key for staff is a key for temporarily permitting the start of the driving source 41 and maneuvering of the marine vessel 100 in order to allow the staff member to perform various kinds of works such as temporarily moving the marine vessel 100 being the rental target and refueling of the marine vessel 100 being the rental target. By causing the staff terminal 50 to receive the electronic key for staff, the management server 10 is able to permit the staff member to perform various kinds of works without handing over a master key of the marine vessel 100 being the rental target to the staff member. It should be noted that the maximum output of the driving source 41 when the driving source 41 is started by using the electronic key for staff may be limited to a predetermined output.

It should be noted that a generation timing of the electronic key for staff may be the same as a generation timing of the electronic key for user or may be earlier than the generation timing of the electronic key for user. In addition, it is sufficient if the electronic key for staff is transmitted to the staff terminal 50 before renting out the marine vessel begins, and the transmission timing of the electronic key for staff may be before, after or at the same time as the transmission timing of the electronic key for user to the user terminal 20. Moreover, it is not essential that the generation timing and the transmission timing of the electronic key for staff depend on the generation timing and the transmission timing of the electronic key for user. For example, the electronic key for staff may be generated and transmitted in response to a request from the owner. It should be noted that the destination of the electronic key for staff may be the staff terminal 50 possessed by at least one staff member in charge of providing services of the marine vessel 100 being the rental target, or may be a plurality of staff terminals 50.

In the step S106, the CPU 11 executes other processing. In the other processing, for example, the CPU 11 makes a reservation to transmit the corresponding information corresponding to the electronic key generated in the step S102 to the DCM 30, the unlocking processing unit 60, and the unlocking processing unit 203. In addition, it is sufficient if the corresponding information is transmitted to the DCM 30, the unlocking processing unit 60, and the unlocking processing unit 203 before renting out the marine vessel begins, and a transmission timing of the corresponding information to the DCM 30, the unlocking processing unit 60, and the unlocking processing unit 203 may be before, after or at the same time as the transmission timing of the electronic key for user to the user terminal 20. It should be noted that the corresponding information may be transmitted in response to a request at a point in time when the corresponding information becomes necessary for processing in the DCM 30, the unlocking processing unit 60, and the unlocking processing unit 203. The corresponding information is stored in the memory 34 of the DCM 30, the memory 64 of the unlocking processing unit 60, and a memory (not shown) of the unlocking processing unit 203.

In addition, in the other processing, the CPU 11 may execute an electronic key regeneration processing and an electronic key retransmission processing due to changes in rental conditions (such as a change in the rental target and a change in the rental period), and/or a cancellation processing. After the step S106, the CPU 11 returns the electronic key issuing processing to the step S101.

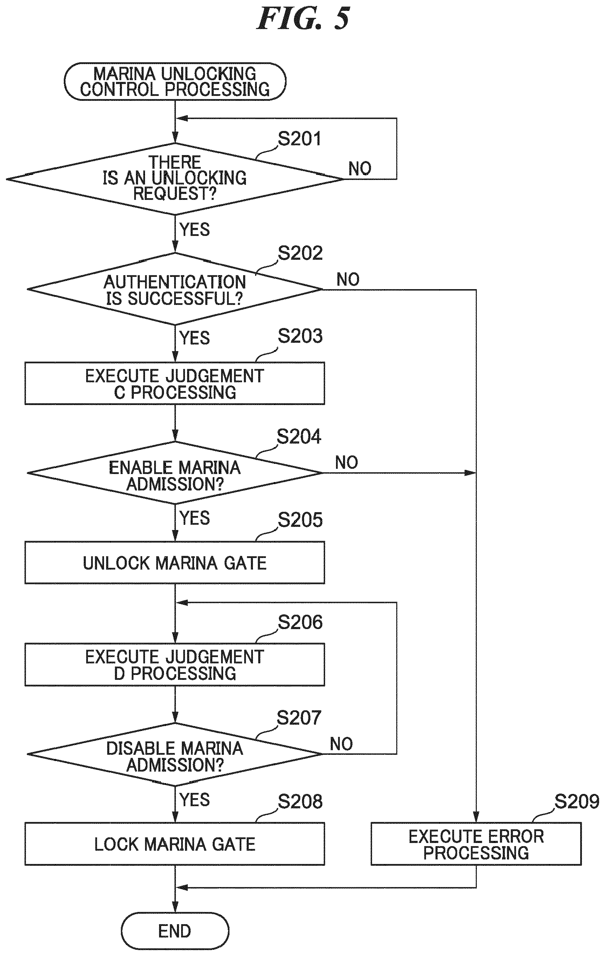

FIG. 5 is a flowchart that shows a marina unlocking control processing. The marina unlocking control processing is realized by the CPU 61 of the unlocking processing unit 60 of the marina gate 201 loading the program stored in the ROM 62 or the memory 64 into the RAM 63 and executing it.

In the marina unlocking control processing, it is assumed that the user who has completed the marine vessel rental reservation goes to the marina 200 and tries to pass through the marina gate 201 in order to borrow the marine vessel 100. The electronic key is already stored in the user terminal 20.

As shown in FIG. 5, in a step S201, the CPU 61 waits until an unlocking request to request the unlocking of the marina gate 201 is received. Here, the user is able to issue the unlocking request by launching the rental application on the user terminal 20 and pressing a marina gate unlocking request button (not shown) displayed on the rental application displayed on the display unit 25 of the user terminal 20. The electronic key is also transmitted at the same time with the unlocking request. The issued unlocking request is transmitted to the unlocking processing unit 60 via the network 110. Alternatively, the issued unlocking request may be transmitted to the unlocking processing unit 60 by short-range wireless communication. Upon receiving the unlocking request, the CPU 61 advances the marina unlocking control processing to a step S202.

In the step S202, the CPU 61 executes an authentication processing of the user terminal 20 that is a transmission source of the unlocking request, and judges whether or not the authentication of the user terminal 20 is successful (the authentication of the user terminal 20 is OK). Here, for example, the CPU 61 performs the authentication of the user terminal 20 based on whether or not the corresponding information linked to the ID included in the electronic key received at the same time with the unlocking request is stored in the memory 64. In the case that the corresponding information linked to the ID is not stored in the memory 64, the CPU 61 judges that the authentication of the user terminal 20 has failed, and advances the marina unlocking control processing to a step S209. In the step S209, the CPU 61 executes an error processing and ends the marina unlocking control processing shown in FIG. 5. In the error processing, for example, the fact that the authentication of the user terminal 20 has failed is notified by a display or a voice.

On the other hand, in the case that the corresponding information linked to the ID is stored in the memory 64, the CPU 61 judges that the authentication of the user terminal 20 is successful, and advances the marina unlocking control processing to a step S203. After the step S203, the CPU 61 permits or prohibits the unlocking of the marina gate 201 based on the rental period and the current time.

Here, "the rental period" is defined. The rental period in "the corresponding information" is not "a reservation rental period" but "a substantial rental period". The reservation rental period is the period specified by the user at the stage of applying for the marine vessel rental reservation, and is the period recognized by the user as the rental period. On the other hand, the substantial rental period is a period during which it is possible to actually permit the start of the driving source 41.

The substantial rental period is a period from a time point that is before a start timing of the reservation rental period by a first margin time to a time point that is after an end timing of the reservation rental period by a second margin time. For example, in the case that the reservation rental period is 10:00 to 15:00 and both the first margin time and the second margin time are 5 minutes, the substantial rental period becomes 9:55 to 15:05.

It should be noted that either or both of the first margin time and the second margin time may be zero. Therefore, the start timing of the reservation rental period and a start timing of the substantial rental period may coincide. Alternatively, the end timing of the reservation rental period and an end timing of the substantial rental period may coincide.

"The rental period" that appears in the description of FIGs. 4 to 6 after the marine vessel rental reservation is completed is the substantial rental period. Henceforth, unless otherwise specified, the rental period means the substantial rental period.

In the step S203, the CPU 61 executes a judgement C processing. In the judgement C processing, first, the CPU 61 obtains the current time. Then, the CPU 61 judges whether or not the current time belongs to a period from a time point that is before the start timing of the rental period by a predetermined time T1 (for example, one hour) to a time point that is after the end timing of the rental period by a predetermined time T2 (for example, one hour).

The reason why the predetermined time T1 and the predetermined time T2 are provided is that sometimes the user wants to enter and leave the marina 200 before and after the period during which it is possible to borrow the marine vessel 100. It should be noted that values of the predetermined time T1 and the predetermined time T2 are not limited to one hour exemplified. In addition, either or both of the predetermined time T1 and the predetermined time T2 may be zero.

In a step S204, the CPU 61 judges whether or not to enable marina admission (marina entry) based on the result of the judgement C processing. That is, in the case that the current time belongs to the period from the time point that is before the start timing of the rental period by the predetermined time T1 to the time point that is after the end timing of the rental period by the predetermined time T2, the CPU 61 judges to enable the marina admission (judges that the marina admission is enabled). On the other hand, in the case that the current time does not belong to the period from the time point that is before the start timing of the rental period by the predetermined time T1 to the time point that is after the end timing of the rental period by the predetermined time T2, the CPU 61 judges to disable the marina admission (judges that the marina admission is disabled).

In the case of being judged that the marina admission is disabled, the CPU 61 executes the error processing in the step S209, and ends the marina unlocking control processing shown in FIG. 5. In this case, the unlocking of the marina gate 201 is prohibited. In the error processing here, for example, the fact that the marina admission is disabled (permission of the marina admission has failed) is notified by a display or a voice.

On the other hand, in the case of being judged that the marina admission is enabled, the CPU 61 advances the marina unlocking control processing to a step S205, and permits the unlocking of the marina gate 201. After permitting the unlocking of the marina gate 201, when the user performs an unlocking operation, the CPU 61 unlocks the marina gate 201. It should be noted that after permitting the unlocking of the marina gate 201, the CPU 61 may unlock the marina gate 201 in response to the unlocking operation performed by the user within a certain period of time.
Alternatively, after permitting the unlocking of the marina gate 201, the CPU 61 may automatically and temporarily unlock the marina gate 201 even in the case that there is no the unlocking operation performed by the user. When the marina gate 201 is unlocked, the user is able to pass through the marina gate 201.

In a step S206, the CPU 61 executes a judgement D processing. In the judgement D processing, first, the CPU 61 obtains the current time. Then, the CPU 61 judges whether or not the current time has passed the time point that is after the end timing of the rental period by the predetermined time T2.

In a step S207, the CPU 61 judges whether to continue to enable the marina admission or to disable the marina admission based on the result of the judgement D processing. That is, the CPU 61 judges to continue to enable the marina admission until the current time passes the time point that is after the end timing of the rental period by the predetermined time T2, and returns the marina unlocking control processing to the step S206. Therefore, the user is able to enter and leave the marina 200 during this period.

However, when the current time has passed the time point that is after the end timing of the rental period by the predetermined time T2, the CPU 61 judges to disable the marina admission (judges that the marina admission is disabled), and advances the marina unlocking control processing to a step S208. That is, when the current time no longer belongs to the period from the time point that is before the start timing of the rental period by the predetermined time T1 to the time point that is after the end timing of the rental period by the predetermined time T2, the marina admission is judged to be disabled.

In the step S208, the CPU 61 prohibits the unlocking of the marina gate 201, that is, the CPU 61 locks the marina gate 201. Therefore, even if the user performs the unlocking operation, the user is not able to unlock the marina gate 201 and is not able to pass through the marina gate 201. After the step S208, the CPU 61 ends the marina unlocking control processing shown in FIG. 5.

According to the marina unlocking control processing shown in FIG. 5, the unlocking of the marina gate 201 is permitted from the time point that is before the start timing of the rental period by the predetermined time T1. In addition, after the unlocking of the marina gate 201 is permitted, the unlocking permission of the marina gate 201 is continued until the time point that is after the end timing of the rental period by the predetermined time T2 passes, and after the time point that is after the end timing of the rental period by the predetermined time T2 has passed, automatically returning to the locked state of the marina gate 201.

It should be noted that an unlocking control processing that permits/prohibits the unlocking of the pier gate 202 when the user tries to pass through the pier gate 202 is executed by the unlocking processing unit 203 in the same manner as the marina unlocking control processing shown in FIG. 5.

In addition, the electronic key is associated with a function that requests the unlocking of the cabin 101, the unlocking of the storage compartment 103, the unlocking of the hatch 105, the unlocking of the storage compartment within the marine vessel 100, and/or unlocking of a storage compartment (not shown) within the marina 200. A plurality of processing that permit/prohibit the unlocking of the cabin 101, the unlocking of the storage compartment 103, the unlocking of the hatch 105, and the unlocking of other storage compartments (the storage compartment within the marine vessel 100 and the storage compartment within the marina 200) may also be executed by the unlocking processing unit 102, the unlocking processing unit 104, the unlocking processing unit (not shown), and the like in the same manner as the marina unlocking control processing shown in FIG. 5. Moreover, from the viewpoint of simplifying the configuration, the unlocking of the cabin 101, the unlocking of the storage compartment 103, the unlocking of the hatch 105, and the unlocking of other storage compartments (the storage compartment within the marine vessel 100 and the storage compartment within the marina 200) may be permitted when communications are established by short-range wireless communication.

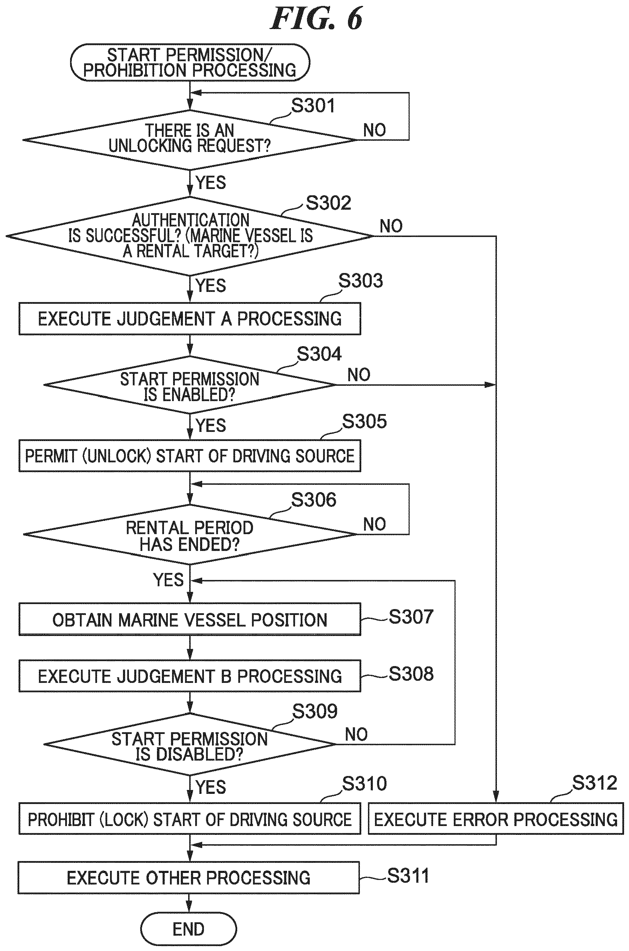

FIG. 6 is a flowchart that shows a start permission/prohibition processing. The start permission/prohibition processing is realized by the CPU 31 of the DCM 30 loading the program stored in the ROM 32 or the memory 34 into the RAM 33 and executing it. The start permission/prohibition processing is started, for example, ten minutes before the start timing of the rental period corresponding to the marine vessel 100.

As shown in FIG. 6, in a step S301, the CPU 31 waits until an unlocking request (a start permission request) to request a start permission of the driving source 41 is received. Here, the user is able to issue the unlocking request (the start permission request) by launching the rental application on the user terminal 20 and pressing a start unlocking request button (not shown) displayed on the rental application displayed on the display unit 25 of the user terminal 20. The electronic key is also transmitted at the same time with the unlocking request (the start permission request). The issued unlocking request (the issued start permission request) is transmitted to the DCM 30 via the network 110. Alternatively, the issued unlocking request (the issued start permission request) may be transmitted to the DCM 30 by short-range wireless communication. Upon receiving the unlocking request (the start permission request) to request the start permission of the driving source 41, and the electronic key, the CPU 31 advances the start permission/prohibition processing to a step S302.

In the step S302, the CPU 31 executes an authentication processing of the user terminal 20 that is a transmission source of the unlocking request (the start permission request), and judges whether or not the authentication of the user terminal 20 is successful (the authentication of the user terminal 20 is OK). Here, for example, the CPU 31 refers to the corresponding information corresponding to the ID included in the received electronic key, and judges whether or not the marine vessel 100 being the rental target in the corresponding information matches the marine vessel 100 corresponding to the CPU 31. Alternatively, the CPU 31 may judge whether or not the marine vessel 100 corresponding to the CPU 31 is the rental target based on whether or not the ID included in the received electronic key has been registered.

In the case that the marine vessel 100 corresponding to the CPU 31 is not the rental target, the CPU 31 judges that the authentication of the user terminal 20 has failed, and advances the start permission/prohibition processing to a step S312. In the step S312, the CPU 31 executes an error processing, and advances the start permission/prohibition processing to a step S311. In the error processing, for example, the fact that the authentication of the user terminal 20 has failed is notified by a display or a voice.

On the other hand, in the case that the marine vessel 100 corresponding to the CPU 31 is the rental target, the CPU 31 judges that the authentication of the user terminal 20 is successful, and advances the start permission/prohibition processing to a step S303. After the step S303, the CPU 31 permits or prohibits the start of the driving source 41 based on the rental period, the current time, and the current position of the marine vessel 100.

In the step S303, the CPU 31 executes a judgement A processing. In the judgement A processing, the CPU 31 obtains the current time, and judges whether or not the current time belongs to the rental period in the corresponding information corresponding to the ID included in the received electronic key. In a step S304, the CPU 31 judges whether or not the start permission of the driving source 41 is enabled based on the result of the judgement A processing. That is, in the case that the current time does not belong to the rental period, the CPU 31 judges that the start permission of the driving source 41 is disabled, and advances the start permission/prohibition processing to the step S312. On the other hand, in the case that the current time belongs to the rental period, the CPU 31 judges that the start permission of the driving source 41 is enabled, and advances the start permission/prohibition processing to a step S305. Therefore, in order to permit the start of the driving source 41 for the first time, it is a condition that the current time belongs to the rental period.

In the step S305, the CPU 31 permits (unlocks) the start of the driving source 41. Thereby, the user is able to start the driving source 41 by operating the start operation portion 42. After that, the user usually maneuvers the marine vessel 100 being the rental target, and the marine vessel 100 being the rental target returns to the port before the rental period has ended. However, it is conceivable that the rental period ends due to a delay in returning-to-port of the marine vessel 100 being the rental target.

In a step S306, the CPU 31 obtains the current time, and waits until the rental period ends (the current time passes the end timing of the rental period). This judgement (the process performed in the step S306) is repeatedly executed at regular time intervals. When the rental period ends, the CPU 31 advances the start permission/prohibition processing to a step S307, and obtains the position information indicating the current position of the marine vessel 100 (hereinafter, referred to as "a marine vessel position").

In a step S308, the CPU 31 executes a judgement B processing. In the judgement B processing, the CPU 31 judges whether or not the obtained marine vessel position is within the predetermined area. In a step S309, the CPU 31 judges whether the start permission of the driving source 41 is enabled or disabled based on the result of the judgement B processing. That is, in the case that the position information of the marine vessel 100 indicates that the marine vessel 100 is within the predetermined area, the CPU 31 judges that the start permission of the driving source 41 is disabled. On the other hand, in the case that the position information of the marine vessel 100 indicates that the marine vessel 100 is not within the predetermined area, the CPU 31 judges that the start permission of the driving source 41 is enabled.

In the case of being judged that the start permission of the driving source 41 is enabled, the CPU 31 returns the start permission/prohibition processing to the step S307. Therefore, after the start of the driving source 41 is permitted, even in the case that the rental period has ended, the start permission of the driving source 41 is continued when the marine vessel 100 is positioned outside the predetermined area.

On the other hand, in the case of being judged that the start permission of the driving source 41 is disabled, since the rental period has ended and the marine vessel 100 is positioned within the predetermined area, the CPU 31 advances the start permission/prohibition processing to a step S310. In the step S310, the CPU 31 prohibits (locks) the start of the driving source 41. As a result, new start of the driving source 41 is prohibited. Therefore, when the driving source 41 is stopped in this state, the driving source 41 cannot be started again.

In the step S311, the CPU 31 executes other processing, and ends the start permission/prohibition processing shown in FIG. 6. In the other processing referred to here, for example, when the user terminal 20 notifies the CPU 31 that the use of the marine vessel 100 has ended, the CPU 31 may end the start permission/prohibition processing shown in FIG. 6.

According to the preferred embodiment of the present invention, the management server 10 generates the electronic key in response to the request from the user terminal 20 and transmits it to the user terminal 20 (the step S102 and the step S103). The DCM 30 permits the start of the driving source 41 on the condition that the current time belongs to the rental period corresponding to the electronic key (the step S305). In the case that the rental period has ended and the position information of the marine vessel 100 indicates that the marine vessel 100 is positioned within the predetermined area, the DCM 30 prohibits the start of the driving source 41 (the step S310). As a result, it is possible to appropriately permit/prohibit the start of the driving source 41 in response to the time, and the position of the marine vessel 100.

Therefore, it is not necessary to share entrance codes for the marina gate 201 and the pier gate 202 with a large number of unspecified users, and to hand over the master key of the marine vessel 100 to a large number of unspecified users. In addition, the owner of the marine vessel 100 does not need to be present when renting out the marine vessel 100. It is also possible to be applied to a sharing service for renting out personal marine vessels.

Furthermore, after the start of the driving source 41 is permitted, even in the case that the rental period has ended, the start permission of the driving source 41 is continued when the marine vessel 100 is positioned outside the predetermined area (NO in the step S309). As a result, it is possible to avoid a situation in which the driving source 41 cannot be restarted while the marine vessel 100 has not returned to the port.

In addition, in response to receiving the unlocking request for the marina gate 201 or the pier gate 202 from the user terminal 20, the unlocking of the marina gate 201 or the pier gate 202 is permitted/prohibited based on the rental period corresponding to the electronic key. As a result, it is also possible to appropriately unlock the marina gate 201 and the pier gate 202 in response to the time.

In addition, the unlocking of the marina gate 201 is permitted from the time point that is before the start timing of the rental period by the predetermined time T1, and the marina gate 201 is locked after the time point that is after the end timing of the rental period by the predetermined time T2 has passed. As a result, the user is free to enter and leave the marina 200 even before and after the rental period, which enhances convenience.

In addition, since the electronic key for staff is transmitted to the staff terminal 50 in correspondence with the electronic key, the staff member is able to smoothly perform works and services related to marine vessel rental. Moreover, since the maximum output of the driving source 41 when the driving source 41 is started by using the electronic key for staff is limited to the predetermined output, improper use of the marine vessel 100 by the staff member can be avoided.

By the way, there is a possibility that after the start of the driving source 41 is prohibited (locked), the marine vessel 100 moves out of the predetermined area again before the driving source 41 stops. Therefore, the configuration may be as follows.

First, in the judgement B processing (the step S308), the CPU 31 may judge whether or not the driving source 41 has stopped in addition to whether or not the marine vessel position is within the predetermined area. In the step S309 in this case, in the case that the position information of the marine vessel 100 indicates that the marine vessel 100 is within the predetermined area and the driving source 41 has stopped, the CPU 31 judges that the start permission of the driving source 41 is disabled. On the other hand, in the case that the position information of the marine vessel 100 indicates that the marine vessel 100 is not within the predetermined area, or in the case that the driving source 41 is in operation, the CPU 31 judges that the start permission of the driving source 41 is enabled.

That is, even in the case that the rental period has ended and the position information of the marine vessel 100 indicates that the marine vessel 100 is positioned within the predetermined area, the CPU 31 may not prohibit the start of the driving source 41 until the operation of the driving source 41 stops (may permit the start of the driving source 41 until the operation of the driving source 41 stops). As a result, in the case that the marine vessel 100 moves out of the predetermined area again while the operation of the driving source 41 is continued after the rental period has ended, it is possible to restart the driving source 41.

Alternatively, in the other processing (the step S311), the CPU 31 continues to obtain the position information of the marine vessel 100, and when the marine vessel 100 moves out of the predetermined area again, the CPU 31 may permit (unlock) the start of the driving source 41 and return the start permission/prohibition processing shown in FIG. 6 to the step S307. As a result, even in the case that the start of the driving source 41 is once prohibited, when the marine vessel 100 moves out of the predetermined area while the driving source 41 is in operation, the start of the driving source 41 is permitted again.

It should be noted that the position information of the marine vessel 100 is obtained in the step S307, that is, the position information of the marine vessel 100 is obtained when the rental period corresponding to the electronic key has ended. However, the obtaining timing of the position information of the marine vessel 100 is not limited to this example, and obtaining of the position information of the marine vessel 100 may be started after the start permission/prohibition processing (FIG. 6) is started and before the step S308.

It should be noted that in the start permission/prohibition processing (FIG. 6), when receiving the start permission request (the unlocking request) for the driving source 41 from the user terminal 20, the start of the driving source 41 is permitted if the current time belongs to the rental period. However, without being limited to this, the start of the driving source 41 may be permitted when the current time belongs to the rental period regardless of access from the user terminal 20.

It should be noted that the obtaining timing (the transmission timing) of the corresponding information corresponding to the electronic key is not limited to the transmission timing described above. For example, the corresponding information corresponding to the electronic key may be transmitted from the management server 10 to the request source in response to a request from the DCM 30, the staff terminal 50, the unlocking processing unit 60, or the unlocking processing unit 203.

It should be noted that the functions of the obtaining unit 122 and the control unit 123 described with reference to FIG. 3 may be realized by the management server 10. In this case, the management server 10 receives an instruction from the DCM 30 and starts the start permission/prohibition processing (FIG. 6). Further, the management server 10 obtains the position information from the DCM 30 in the step S307. Moreover, in the step S305, the management server 10 may cause the DCM 30 to perform a processing to permit the start of the driving source 41 by transmitting an unlocking instruction (a permitting instruction) to the DCM 30, and in the step S310, the management server 10 may cause the DCM 30 to perform a processing to prohibit the start of the driving source 41 by transmitting a locking instruction (a prohibiting instruction) to the DCM 30.

Moreover, even in the case that the DCM 30 executes the start permission/prohibition processing (FIG. 6), the management server 10 may execute a part of the start permission/prohibition processing (FIG. 6) as shown in the following example. As an example, a configuration in which part of the steps S302, S303, and S308 are executed by the management server 10 will be described. It should be noted that the management server 10 is able to independently obtain the current time. Further, the corresponding information corresponding to the electronic key is stored in the memory 14.

For example, in the step S302, the DCM 30 may request the management server 10 to perform the authentication processing, and may receive the result of the authentication processing (hereinafter, referred to as "an authentication result") from the management server 10. The management server 10 executes the authentication processing and transmits the authentication result to the DCM 30. The DCM 30 transmits the electronic key received from the user terminal 20 to the management server 10 when requesting the authentication processing. In the other processing (the step S106 in FIG. 4), the management server 10 executes the authentication processing and a transmission processing of the authentication result. The DCM 30 performs the judgement in the step S302 based on the received authentication result.

Further, in the step S303, the DCM 30 may request the management server 10 to perform the judgement A processing, and may receive the result of the judgement A processing from the management server 10. The management server 10 executes the judgement A processing and transmits the result of the judgement A processing to the DCM 30. The DCM 30 transmits the electronic key received from the user terminal 20 to the management server 10 when requesting the judgement A processing. In the other processing (the step S106 in FIG. 4), the management server 10 executes the judgement A processing. In the step S304, the DCM 30 performs the judgement (the judgement of enabled/disabled) based on the received result of the judgement A processing.

Further, in the step S308, the DCM 30 may request the management server 10 to perform the judgement B processing, and may receive the result of the judgement B processing from the management server 10. The management server 10 executes the judgement B processing and transmits the result of the judgement B processing to the DCM 30. The DCM 30 transmits the electronic key and the marine vessel position that are received from the user terminal 20 to the management server 10 when requesting the judgement B processing. In the other processing (the step S106 in FIG. 4), the management server 10 executes the judgement B processing. In the step S309, the DCM 30 performs the judgement (the judgement of enabled/disabled) based on the received result of the judgement B processing.

In addition, in order to start the driving source 41 in a state in which the start of the driving source 41 is permitted (unlocked), it is necessary to operate the start operation portion 42. However, the rental application may be provided with a function to start the driving source 41, and the driving source 41 may be started by pressing a start button on a screen of the rental application.

Although the present invention has been described in detail based on the preferred embodiments described above, the present invention is not limited to these specific preferred embodiments, and various embodiments within the scope not deviating from the gist of the present invention are also included in the present invention. Some of the above-described preferred embodiments may be combined as appropriate.

It should be noted that the present invention can also be realized by executing the following processing. That is, it is the processing in which software (programs) that realizes the functions of the above-described preferred embodiments is supplied to a system or an apparatus via a network or various kinds of storage media, and a computer (or a CPU, an MPU (Micro Processing Unit), or the like) of the system or the apparatus reads program codes and executes them. In this case, the programs and a storage medium storing the programs constitute the present invention.

## Claims

1. A marine vessel rental system comprising:
a control unit (123) configured or programmed to permit start of a driving source (41) for navigating a marine vessel (100) being a rental target on condition that a current time belongs to a rental period corresponding to an electronic key, which is associated with information about the marine vessel (100) being the rental target and information about the rental period and is stored in a user terminal (20); and
an obtaining unit (122) configured or programmed to obtain position information of the marine vessel (100), and
wherein, in a case that the rental period corresponding to the electronic key has ended and the position information indicates that the marine vessel (100) is positioned within a predetermined area, the control unit (123) is configured or programmed to prohibit the start of the driving source (41).

2. The marine vessel rental system according to claim 1, further comprising:
a generating unit (121) configured or programmed to generates the electronic key, which is associated with information about the marine vessel (100) being the rental target and information about the rental period, in response to a request from a user terminal (20), and transmit it to the user terminal (20).

3. The marine vessel rental system according to claim 1 or 2, wherein, after the start of the driving source (41) is permitted, even in a case that the rental period corresponding to the electronic key has ended, the control unit (123) is configured or programmed to continue a permission of the start of the driving source (41) when the position information indicates that the marine vessel (100) is positioned outside the predetermined area.

4. The marine vessel rental system according to any one of claims 1 to 3, wherein, when receiving a start permission request for the driving source (41) from the user terminal (20), the control unit (123) is configured or programmed to permit the start of the drive source (41) if the current time belongs to the rental period.

5. The marine vessel rental system according to any one of claims 1 to 4, wherein, the obtaining unit (122) is configured or programmed to obtain the position information of the marine vessel (100) when the rental period corresponding to the electronic key has ended.

6. The marine vessel rental system according to any one of claims 1 to 5, further comprising:
an unlocking processing unit (60; 203) configured or programmed to permit or prohibit unlocking of a marina (200) or a pier, which includes a mooring space for the marine vessel (100), based on the rental period corresponding to the electronic key in response to receiving an unlocking request for the marina (200) or the pier from the user terminal (20).

7. The marine vessel rental system according to claim 6, wherein, the unlocking processing unit (60; 203) is configured or programmed to permit the unlocking of the marina (200) or the pier from a time point that is before a start timing of the rental period by a predetermined time.

8. The marine vessel rental system according to claim 6 or 7, wherein, the electronic key is associated with a function that requests unlocking of a cabin (101) of the marine vessel (100), unlocking of a hatch (105) of the marine vessel (100), unlocking of a storage compartment within the marine vessel (100), and/or unlocking of a storage compartment within the marina (200).

9. The marine vessel rental system according to any one of claims 1 to 8, wherein, the generating unit (121) is configured or programmed to generate another electronic key that restricts use of a part of functions of the marine vessel (100), corresponding to the electronic key, and transmit the generated another electronic key to a predetermined terminal device different from the user terminal (20).

10. The marine vessel rental system according to claim 9, wherein, in the another electronic key, a maximum output of the driving source (41) is limited to a predetermined output.

11. The marine vessel rental system according to any one of claims 1 to 10, wherein, even in the case that the rental period corresponding to the electronic key has ended and the position information indicates that the marine vessel (100) is positioned within the predetermined area, the control unit (123) is configured or programmed not to prohibit the start of the driving source (41) while the driving source (41) continues to be in operation.

12. The marine vessel rental system according to any one of claims 1 to 11, wherein,
the control unit (123) and the obtaining unit are provided on the marine vessel (100), and
the generating unit (121) is provided in a server that is able to communicate with the control unit (123).

13. A marine vessel rental method carried out by at least one computer, comprising the following steps:
permitting start (S305) of a driving source (41) for navigating a marine vessel (100) being a rental target on condition that a current time belongs to a rental period corresponding to an electronic key, which is associated with information about the marine vessel (100) being the rental target and information about the rental period and is stored in a user terminal (20);
obtaining (S307) position information of the marine vessel (100); and
in a case that the rental period corresponding to the electronic key has ended and the position information indicates that the marine vessel (100) is positioned within a predetermined area, prohibiting the start of the driving source (41).

14. The marine vessel rental method according to claim 13, further comprising:
generating (S102) the electronic key, which is associated with information about the marine vessel (100) being the rental target and information about the rental period, in response to a request from a user terminal (20), and transmitting (S103) it to the user terminal (20).
